# EUROPÄISCHE PATENTANMELDUNG

(11) **EP 1 862 700 A2**
(43) Veröffentlichungstag der Anmeldung: **05.12.2007**
(21) Anmeldenummer: 07009940.3
(22) Anmeldetag: 18.05.2007
(51) Int. Cl.: F16G 5/18

(54) **Laschenkette, Druckstück dafür und damit versehenes Kegelscheibenumschlingungsgetriebe**

(30) Priorität: 02.06.2006 US 810498 P; 03.06.2006 DE 102006026067
(71) Anmelder: LuK Lamellen und Kupplungsbau Beteiligungs KG, 77815 Bühl (DE)
(72) Erfinder: Simon, Emmanuel, 67850 Herlisheim (FR); Vornehm, Martin, Wooster, Ohio 44691 (US); Simonov, Anton, 77815 Bühl (DE); Vietoris, Aurel, 77815 Bühl (DE); Mayerhofer, Christoph, 77833 Ottersweier (DE)

(57) **Zusammenfassung**

Die Erfindung betrifft eine Laschenkette für insbesondere einen Fahrzeugantrieb, mit einer Vielzahl von über Druckstücke gelenkig miteinander verbundenen Kettenlaschen, wobei die Druckstücke (14) quer zur Längsrichtung der Laschenkette verlaufen und in Öffnungen der Kettenlaschen angeordnet sind und an den Druckstücken und den Kettenlaschen jeweilige gekrümmt ausgebildete Anlageflächen (16,17) angeordnet sind, entlang derer die Druckstücke (14) und Kettenlaschen zur Kraftübertragung aneinander anliegen und die Anlageflächen am in Druckstückhöhenrichtung oberen und unteren Kontaktflächenbereich zwischen Druckstück und Kettenlasche vorgesehen sind und an den Druckstücken gekrümmt ausgebildete Wälzflächen (15) angeordnet sind, entlang derer die Druckstücke zur Kraftübertragung aneinander abwälzen und die Druckstücke Stirnflächen (26) zum reibschlüssigen Kontakt mit Kegelscheiben eines Kegelscheibenumschlingungsgetriebes besitzen, wobei die Stirnflächen (26) derart konfiguriert sind, dass ein Kontakt zwischen den Druckstücken und den Kegelscheiben in Druckstückhöhenrichtung im oberen Bereich der Stirnflächen (26) stattfindet.

## Beschreibung

Die vorliegende Erfindung betrifft eine Laschenkette für insbesondere einen Fahrzeugantrieb, mit einer Vielzahl von über Druckstücke gelenkig miteinander verbundenen Kettenlaschen, wobei die Druckstücke quer zur Längsrichtung der Laschenkette verlaufen und in Öffnungen der Kettenlaschen angeordnet sind und an den Druckstücken und den Kettenlaschen jeweilige gekrümmt ausgebildete Anlageflächen angeordnet sind, entlang derer die Druckstücke und Kettenlaschen zur Kraftübertragung aneinander anliegen und die Anlageflächen am in Druckstückhöhenrichtung oberen und unteren Kontaktflächenbereich zwischen Druckstück und Kettenlasche vorgesehen sind und an den Druckstücken gekrümmt ausgebildete Wälzflächen angeordnet sind, entlang derer die Druckstücke zur Kraftübertragung aneinander abwälzen und die Druckstücke Stirnflächen zum reibschlüssigen Kontakt mit Kegelscheiben eines Kegelscheibenumschlingungsgetriebes besitzen. Die Erfindung betrifft darüber hinaus ein Druckstück für eine Laschenkette, mit einer Wälzfläche zum Kontakt mit einem zugeordneten Druckstück eines Druckstückpaares und der Wälzfläche weitgehend gegenüberliegend angeordneten gekrümmt ausgebildeten Anlageflächen sowie Stirnflächen zum reibschlüssigen Kontakt mit Kegelscheiben eines Kegelscheibenumschlingungsgetriebes und zudem betrifft die Erfindung auch ein damit versehenes Kegelscheibenumschlingungsgetriebe mit einem antriebsseitigen und einem abtriebsseitigen Kegelscheibenpaar und einer Druckstücke aufweisenden Laschenkette zur Momentenübertragung.

Gattungsgemäße Kegelscheibenumschlingungsgetriebe sind bereits in mehreren Ausführungsformen bekannt geworden. Als Umschlingungsmittel zur Drehmomentübertragung zwischen dem antriebsseitigen und dem abtriebsseitigen Kegelscheibenpaar finden beispielsweise Laschenketten Einsatz, die auf den Kegelscheiben laufen. Zu diesem Zweck eingesetzte Laschenketten besitzen Druckstücke, die über ihre jeweiligen Stirnflächen mit den Kegelscheiben in Reibkontakt kommen und dadurch ein Drehmoment von dem antriebsseitigen Kegelscheibenpaar über die Laschenkette auf das abtriebsseitige Kegelscheibenpaar übertragen.

Der Kontakt zwischen den Kegelscheibenpaaren und den Druckstücken findet dabei nach herrschender Ansicht polygonzugartig statt, da die einzelnen Druckstücke in Kettenlaufrichtung betrachtet zueinander beabstandet sind. Beim Lauf der Laschenkette über die Kegelscheibenpaare treten die Druckstücke nacheinander mit den Kegelscheiben in Kontakt, sodass es beim Auftreffen der Stirnflächen der Druckstücke auf die Kegelscheiben zu einem sogenannten Impact kommt, der zu einer Körperschallanregung der Kegelscheiben führt.

Wie es vorstehend bereits erwähnt wurde, dienen die Stirnflächen der Druckstücke zur Reibkraftübertragung zwischen dem antriebsseitigen Kegelscheibenpaar und der Laschenkette sowie der Laschenkette und dem abtriebsseitigen Kegelscheibenpaar. Da es sich daher um eine reibungsinduzierte Kraftübertragung handelt, wurden die Druckstücke nach bisheriger Auslegung derart konfiguriert, dass eine Reibkraftübertragung zwischen den Kegelscheibenflächen und den Stirnflächen der Druckstücke an der gesamten Stirnfläche erfolgt und die Stirnflächen daher komplett als Kontaktzone genutzt wurden, da dies aufgrund der damit verbundenen Verteilung des Verschleißes an den Stirnflächen verschleißgünstig sein soll.

Läuft nun ein Laschenkettensegment zwischen ein Kegelscheibenpaar ein, so kommt es zu einem Abknicken der Laschenkette, das durch den Kettenzug ausgelöst wird und an einer Stelle erfolgt, an dem das Kegelscheibenpaar beginnt, eine Kraft auf die Laschenkette auszuüben. Diese Übergangszone wird räumlich oder zeitlich als klein bzw. kurz verstanden, es kommt also quasi zu einem digitalen Übergang. Dies wird nach herrschender Meinung als polygonaler Lauf verstanden. In gleicher Weise findet der Einlaufvorgang der Druckstücke zwischen die Kegelscheibenpaare während einer zeitlich sehr kurzen Übergangszone statt, während der es zu dem bereits vorher erwähnten "impact" kommt, bei dem also während einer sehr kurzen Zeitdauer eine Impulsanregung des Kegelscheibenpaars stattfindet mit einem hammerschlagartigen Einlaufeffekt und entsprechender Körperschallanregung, was zu negativen akustischen Eigenschaften führt.

Wird nun eine Konfiguration der Laschenkette bzw. der Kegelscheiben und damit des Kegelscheibenumschlingungsgetriebes geschaffen, die diesen Hammerschlageffekt reduziert, so führt dies einerseits zu einem verschleißgünstigeren Verhalten der Laschenkette und des Kegelscheibenumschlingungsgetriebes sowie zu einem akustisch vorteilhafteren Lauf der Laschenkette und damit des Kegelscheibenumschlingungsgetriebes insgesamt.

Ausgehend hiervon liegt der vorliegenden Erfindung nunmehr die Aufgabe zugrunde, eine beispielsweise anhand der DE 199 58 073 A1 bekannte Laschenkette so weiterzubilden, dass das Laufverhalten der Laschenkette in akustischer Hinsicht Verbesserungen erfährt und auch das Verschleißverhalten der Druckstücke verbessert wird.

Die zur Lösung dieser Aufgabe geschaffene Laschenkette weist nun die Merkmale des Anspruchs 1 auf. Vorteilhafte Ausgestaltungen hiervon sind in den weiteren Ansprüchen beschrieben. Die Erfindung schafft darüber hinaus ein Druckstück mit den Merkmalen des Anspruchs 6 sowie ein Kegelscheibenumschlingungsgetriebe mit den Merkmalen des Anspruchs 7. Vorteilhafte Ausgestaltungen des Kegelscheibenumschlingungsgetriebes sind in den weiteren Ansprüchen angegeben.

Die Erfindung geht von der Erkenntnis aus, dass die Kontaktzone zwischen den Druckstücken und den Kegelscheibenpaaren konstruktiv durch die Konturpaarung Druckstück-Kegelscheibe festgelegt wird. Nach den derzeit bekannten Laschenketten werden die Stirnflächen der Druckstücke komplett als Kontaktzone genutzt. Es bedeutet dies mit anderen Worten, dass beim Durchfahren des kompletten Übersetzungsverhältnisses des stufenlos verstellbaren Kegelscheibenumschlingungsgetriebes der Stirnflächenbereich der Druckstücke vollständig überfahren wird vom unteren Stirnflächenbereich bis zum oberen Stirnflächenbereich. Dieser Vorgehensweise liegt auch die Überlegung zugrunde, dass damit der Verschleiß auch an der gesamten Stirnfläche der Druckstücke verteilt werden kann und somit eine Verringerung des Verschleißes erzielt wird.

Abweichend hiervon schafft die Erfindung nunmehr eine Laschenkette für insbesondere einen Fahrzeugantrieb, mit einer Vielzahl von über Druckstücke gelenkig miteinander verbundenen Kettenlaschen, wobei die Druckstücke quer zur Längsrichtung der Laschenkette verlaufen und in Öffnungen der Kettenlaschen angeordnet sind und an den Druckstücken und den Kettenlaschen jeweilige gekrümmt ausgebildete Anlageflächen angeordnet sind, entlang derer die Druckstücke und Kettenlaschen zur Kraftübertragung aneinander in Anliegeflächen anliegen und an den Druckstücken gekrümmt ausgebildete Wälzflächen angeordnet sind, entlang derer die Druckstücke zur Kraftübertragung aneinander abwälzen und die Druckstücke Stirnflächen zum reibschlüssigen Kontakt mit Kegelscheiben eines Kegelscheibenumschlingungsgetriebes besitzen, wobei die Stirnflächen derart konfiguriert sind, dass ein Kontakt zwischen den Druckstücken und den Kegelscheiben in Druckstückhöhenrichtung im oberen Bereich der Stirnflächen stattfindet.

Damit schafft die Erfindung eine Laschenkette, deren Druckstücke Stirnflächen besitzen, bei denen ein Teilbereich der Stirnfläche vom Kontakt mit den Kegelscheiben ausgenommen wird. Die Erfindung hat zu der überraschenden Erkenntnis geführt, dass, obwohl ein Teilbereich der zur Kraftübertragung zur Verfügung stehenden Stirnflächen der Druckstücke nicht mehr benutzt wird, trotzdem ein verschleißgünstigeres Verhalten der Laschenkette erreicht wird und zwar trotz der Verkleinerung der zur Verfügung stehenden Kontaktzone an den Druckstücken und diese Veränderung zusätzlich akustisch von Vorteil ist.

Nach einer Weiterbildung der Erfindung ist es dabei vorgesehen, dass sich der Kontaktbereich an den Stirnflächen entlang etwa 65 % bis etwa 85 % der Druckstückhöhenrichtung erstreckt. Es führt dies auch dazu, dass von der gesamten Stirnfläche eines Druckstücks zur Kraftübertragung und damit zum Kontakt mit den Kegelscheibenflächen nur mehr etwa 65 % bis 85 % zur Kraftübertragung genutzt werden und sich trotz dieser Verkleinerung der nutzbaren Kontaktfläche an den Druckstücken sowohl ein verschleißgünstigeres als auch ein akustisch günstigeres Verhalten der Laschenkette ergibt.

Nach einer Weiterbildung der Erfindung ist es dabei vorgesehen, dass die Stirnflächen in Druckstückhöhenrichtung vom oberen zum unteren Bereich eine steigende Krümmung besitzen. Damit wird erreicht, dass beim Überfahren der zur Kraftübertragung zur Verfügung stehenden Stirnfläche der Druckstücke der in Druckstückhöhenrichtung untere Bereich von etwa 15 bis 35 %, was etwa 15 bis etwa 35 % der Gesamtfläche der Stirnfläche eines Druckstücks entspricht, von der Kraftübertragung und damit vom Kontakt mit den Kegelscheibenflächen ausgeschlossen wird.

Ganz allgemein ist die Konfiguration der Stirnflächen der Druckstücke nach der vorliegenden Erfindung so gewählt, dass die Stirnflächen im unteren Bereich eine Krümmung besitzen derart, dass während des Kontakts der Druckstücke mit den Kegelscheiben ein Freiraum und damit ein Abstand zwischen den Stirnflächen und den Kegelscheiben verbleibt.

Durch diese erfindungsgemäße Konfiguration wird erreicht, dass beim Einlaufen von Druckstücken in einen Zwischenraum zwischen zwei Kegelscheiben an den Druckstücken ein Kippmoment entsteht, welches auf ein in Laufrichtung nachfolgendes Kettensegment der Laschenkette eine Kraft ausübt derart, dass ein Einlaufkrümmungsradius des Kettensegments größer ist als ein Umschlingungsradius der Kegelscheiben.

Bei Laschenketten liegen sich Druckstücke in Öffnungen der Kettenlaschen jeweils paarweise gegenüber, wobei ein Druckstück fest mit einer Kettenlasche verbunden ist und das gegenüberliegende Druckstück mit einer benachbarten Kettenlasche fest verbunden ist und womit beim Abwinkelvorgang, also einem Übergang der Kettenlaschen von einer gestreckten Lage in eine abgewinkelte Lage ein Wälzvorgang zwischen einander gegenüberliegenden Druckstücken stattfindet. Kommt nun bei einem Einlaufvorgang der Laschenkette in den Zwischenraum zweier Kegelscheiben ein erfindungsgemäß ausgestaltetes Druckstück mit den Kegelscheiben in Kontakt, so führt dies zu einem Kippmoment auf die in Laufrichtung nachfolgende Kettenlasche - also beispielsweise bei einem rechten Druckstück eines Druckstückpaars welches in den Zwischenraum zwischen zwei Kegelscheiben einläuft, auf die in Laufrichtung linksseitige Kettenlasche - und dieses Kippmoment übt auf die Kettenlasche und somit auf das Kettensegment eine Kraft in Richtung vom Mittelpunkt der Kegelscheiben aus betrachtet nach radial außen aus, sodass der Einlaufkrümmungsradius des Kettensegments größer wird als der Umschlingungsradius der Kegelscheiben und somit die Einlauftrajektorie geglättet wird und damit der Einlaufimpuls verringert wird.

Es findet also ein kontinuierlicher und damit weicherer Übergang des Kettensegments vom geradlinigen in den abgewinkelten Lauf statt, was zu einer zeitlichen Verlängerung des Übergangs des Kettensegments vom geraden Strangstück in die Umschlingung führt und damit nicht mehr zu einem digitalen Übergang, wie dies bisher der Fall ist, wodurch die für den Übergang zur Verfügung stehende Zeit verlängert wird und damit der Einlaufimpuls verringert wird, was mit einer Abnahme des vorstehend bereits beschriebenen Hammerschlageffekts eingeht und somit auch zu einem leiseren Lauf der Laschenkette und damit zu einer Verringerung der nach außen in Erscheinung tretenden Geräusche des Kegelscheibenumschlingungsgetriebes.

Die Erfindung schafft nun auch ein Druckstück für eine Laschenkette, mit einer Wälzfläche zum Kontakt mit einem zugeordneten Druckstück eines Druckstückpaares und der Wälzfläche weitgehend gegenüberliegend angeordneten gekrümmt ausgebildeten Anlageflächen sowie Stirnflächen zum reibschlüssigen Kontakt mit Kegelscheiben eines Kegelscheibenumschlingungsgetriebes, wobei die Stirnflächen des Druckstücks derart konfiguriert sind, dass ein Kontakt zwischen dem Druckstück und den Kegelscheiben in Druckstückhöhenrichtung im oberen Bereich der Stirnflächen stattfindet.

Um nun zu erreichen, dass sich ein Kontakt zwischen den Stirnflächen und den Kegelscheiben am in Druckstückhöhenrichtung oberen Bereich der Stirnflächen einstellt, ist es nach einer Weiterbildung der Erfindung vorgesehen, dass die Stirnflächen in Druckstückhöhenrichtung vom oberen zum unteren Bereich eine zunehmende Krümmung besitzen derart, dass ein Kontaktbereich an einer jeweiligen Stirnfläche etwa 65 % bis etwa 85 % der Stirnfläche beträgt. Damit stehen an den Druckstücken von der jeweiligen Gesamtfläche einer jeden Stirnfläche etwa 65 % bis etwa 85 % der Stirnfläche zum Kontakt mit den Kegelscheiben bereit, sodass etwa 15 % bis etwa 35 % der Stirnflächen keinen Kontakt mit den Kegelscheiben ausbilden.

Die Erfindung schafft auch ein Kegelscheibenumschlingungsgetriebe mit einem antriebsseitigen und einem abtriebsseitigen Kegelscheibenpaar und einer Druckstücke aufweisenden Laschenkette zur Momentenübertragung, wobei die Kegelscheiben derart konfiguriert sind, dass der Kontakt zwischen den Druckstücken und den Kegelscheiben im in Druckstückhöhenrichtung oberen Bereich der Stirnflächen der Druckstücke stattfindet. Zu diesem Zweck ist es beispielsweise nach der Erfindung möglich, dass die Kegelflächen gekrümmt ausgebildet sind und die Krümmung der Kegelscheiben mit zunehmendem Radius der Kegelscheiben zunimmt. Somit wird beispielsweise erreicht, dass am Kontaktpaar Kegelscheibenfläche-Druckstückstirnfläche kein komplementärer Tangentenwinkel zur Verfügung steht, der für einen Kontakt zwischen der Stirnfläche des Druckstücks und der Kegelscheibenfläche sorgt und somit das Druckstück wiederum mit seinem unteren Stirnflächenbereich nicht mit den Kegelscheibenflächen in Kontakt kommt.

Die Erfindung wird im Folgenden anhand der Zeichnung näher erläutert. Diese zeigt in:
- Fig. 1: eine schematische Darstellung eines Kettenzugs einer bekannten Laschenkette bei einem Umlenkvorgang während des Laufs über ein Kegelscheibenpaar;
- Fig. 2: eine Darstellung ähnlich Fig. 1, die die Verhältnisse beim Lauf einer erfindungsgemäßen Laschenkette zeigt;
- Fig. 3A: eine Darstellung des gemessenen Verschleißes an den Stirnflächen zweier Druckstücke der bekannten Laschenkette;
- Fig. 3B: eine Darstellung ähnlich Fig. 3A, die aber den Verschleiß an zwei Druckstücken der erfindungsgemäßen Laschenkette zeigt;
- Fig. 4A: eine Darstellung der Reibleistung durch den Kontakt eines Druckstücks mit einer Kegelscheibe beim antreibenden Kegelscheibenpaar und beim angetriebenen Kegelscheibenpaar und zwar, wenn der Kontakt zwischen den Druckstücken und den Kegelscheiben in Druckstückhöhenrichtung im unteren Bereich der Stirnflächen der Druckstücke stattfindet;
- Fig. 4B: eine Darstellung ähnlich Fig. 4A, die aber die Reibleistung zeigt, wenn der Kontakt zwischen den Druckstücken und den Kegelscheiben in Druckstückhöhenrichtung im oberen Bereich der Stirnflächen stattfindet;
- Fig. 5: eine Darstellung des Geräuschpegels einer bekannten Laschenkette sowie einer erfindungsgemäßen Laschenkette;
- Fig. 6A: eine Darstellung des gemessenen Zugkraftverlaufs einer Kettenlasche bei einer bekannten Laschenkette;
- Fig. 6B: eine Darstellung ähnlich Fig. 6A, die aber dem Zugkraftverlauf einer Kettenlasche bei einer erfindungsgemäßen Laschenkette zeigt;
- Fig. 7: in der linken Zeichnungshälfte eine Schnittdarstellung eines Ausschnitts einer Kegelscheibe mit einem daran angeordneten Druckstück und in der rechten Zeichnungshälfte eine vergrößerte Darstellung des Druckstücks im Schnitt; und
- Fig. 8: eine Darstellung ähnlich Fig. 7, die aber in der rechten Zeichnungshälfte eine Schnittdarstellung eines erfindungsgemäßen Druckstücks zeigt.

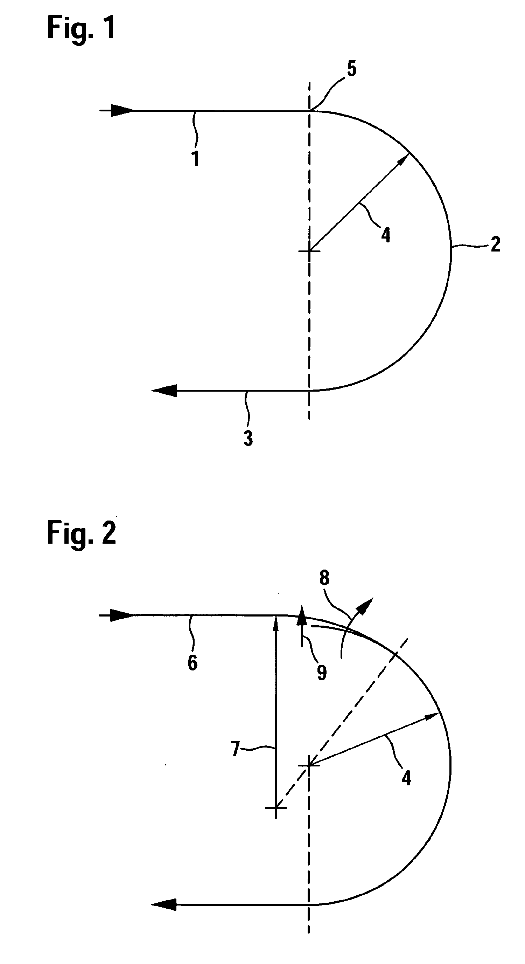

Fig. 1 zeigt die Konfiguration, die ein Ausschnitt einer bekannten Laschenkette im gestreckten Bereich 1 vor einer Umlenkung im Bereich 2 zwischen einem Kegelscheibenpaar und einer dann wieder gestreckten Lage 3 nach dem Auslauf dem Kegelscheibenpaar einnimmt. Bevor ein Kettensegment in den Zwischenraum zwischen einem Kegelscheibenpaar gelangt, besitzt es in dem Bereich 1 eine gestreckte Konfiguration. Während seines Kontakts mit dem Kegelscheibenpaar nimmt es im Bereich 2 eine abgewinkelte Konfiguration ein, die einem Umschlingungsradius 4 entspricht und wenn das Kettensegment den Zwischenraum zwischen dem Kegelscheibenpaar wieder verlassen hat, nimmt es im Bereich 3 wieder eine gestreckte Konfiguration ein.

Der Übergang von der gestreckten Konfiguration 1 in die abgewinkelte Konfiguration im Bereich 2 findet dabei in dem Übergangspunkt 5 statt, es wird also das Abknicken der Laschenkette durch den Kettenzug ausgelöst und es erfolgt an der als Übergangspunkt 5 bezeichneten Stelle, an dem die Kegelscheiben beginnen, auf die Laschenkette eine Kraft auszuüben.

Dieser Bereich wird räumlich oder zeitlich als klein oder kurz verstanden, gleichsam als ein digitaler Übergang aus der gestreckten Konfiguration in die abgewinkelte Konfiguration, es wird von einem polygonzugartigen Lauf gesprochen und beim Einlaufen der Druckstücke des Kettensegments in das Kegelscheibenpaar findet ein Impuls statt, bei dem es zu einem Hammerschlageffekt kommt, was durch den Begriff "Impact" beschrieben wird. Durch den gleichsam digitalen Übergang im Übergangspunkt 5 erfährt das Kettensegment eine hohe Beschleunigung und damit eine große Kraftbeaufschlagung während einer sehr kurzen Zeitdauer, was zu einem akustisch ungünstigen Laufverhalten führt mit hohen messbaren Geräuschpegeln.

Fig. 2 der Zeichnung zeigt einen Ausschnitt eines Kettenzugs eines Kettensegments einer erfindungsgemäßen Laschenkette.

Durch die Ausgestaltung der erfindungsgemäßen Laschenkette kommt es zu einem Kontakt zwischen den Druckstücken und den Kegelscheiben in Druckstückhöhenrichtung im oberen Bereich der Stirnflächen der Druckstücke. Dadurch entsteht beim Einlaufen der Druckstücke in einen Zwischenraum zwischen zwei Kegelscheiben an den Druckstücken ein Kippmoment, welches auf ein in Laufrichtung nachfolgendes Kettensegment eine Kraft ausübt derart, dass der Einlaufkrümmungsradius dieses nachfolgenden Kettensegments größer ist als der Umschlingungsradius der Kegelscheiben.

Fig. 2 verdeutlicht nun diesen Sachverhalt. Mit dem Bezugszeichen 6 wird ein Bereich bzw. ein gestreckter Kettenzug bezeichnet, der dem vorstehend erwähnten nachfolgenden Kettensegment zugeordnet ist. Durch die Verlagerung des Kontaktpunkts zwischen den Druckstücken und den Kegelscheiben in den oberen Bereich der Stirnflächen der Druckstücke entsteht am Druckstück ein Kippmoment, welches auf die mit dem Druckstück fest verbundene nachlaufende Kettenlasche wirkt und zu einer Verlagerung der Kettenbahn in Richtung radial nach außen führt, sodass die Einlauftrajektorie der Druckstücke der nachlaufenden Kettenlaschen geglättet ist und diese daher beim Einlaufen in den Zwischenraum der Kegelscheiben nicht mehr einen gleichsam digitalen Übergang von einer gestreckten Lage in eine abgewinkelte Lage vollführen, sondern in einer bereits geringfügig aus der gestreckten Lage ausgelenkten Lage in das Kegelscheibenpaar einlaufen und damit bereits eine Kraftkomponente erfahren, die der Kraftkomponente auf das Kettensegment während der Umlenkung zwischen den Kegelscheibenpaaren entspricht.

Dadurch findet ein verglichen mit dem gleichsam digitalen Übergang aus der gestreckten Lage in die abgewinkelte Lage in Fig. 1 kontinuierlicher Übergang aus der gestreckten Lage in die abgewinkelte Lage des Kettensegments statt und es kommt zu einem weniger stark ausgeprägten Hammerschlageffekt, der Einlaufimpuls beim Einlaufen der Druckstücke des nachfolgenden Kettensegments in das Kegelscheibenpaar wird geringer und die akustische Belastung durch den Einlaufeffekt nimmt ebenfalls ab. Ein mit der erfindungsgemäßen Laschenkette ausgestattetes Kegelscheibenumschlingungsgetriebe erzeugt weniger Körperschall und tritt daher nach außen leiser in Erscheinung. Während der mit dem Bezugszeichen 4 bezeichnete Pfeil den Umschlingungsradius darstellt, beschreibt der mit dem Bezugszeichen 7 bezeichnete Pfeil den Einlaufkrümmungsradius des nachlaufenden Kettensegments, der größer ist als der Umschlingungsradius 4, was aufgrund des vorstehend bereits erwähnten Kippmoments an der dem nachlaufenden Kettensegment vorauslaufenden Druckstücke zurückzuführen ist, was in Fig. 2 durch den Pfeil 8 und den radial in Richtung nach außen gerichteten Kraftpfeil 9 dargestellt ist.

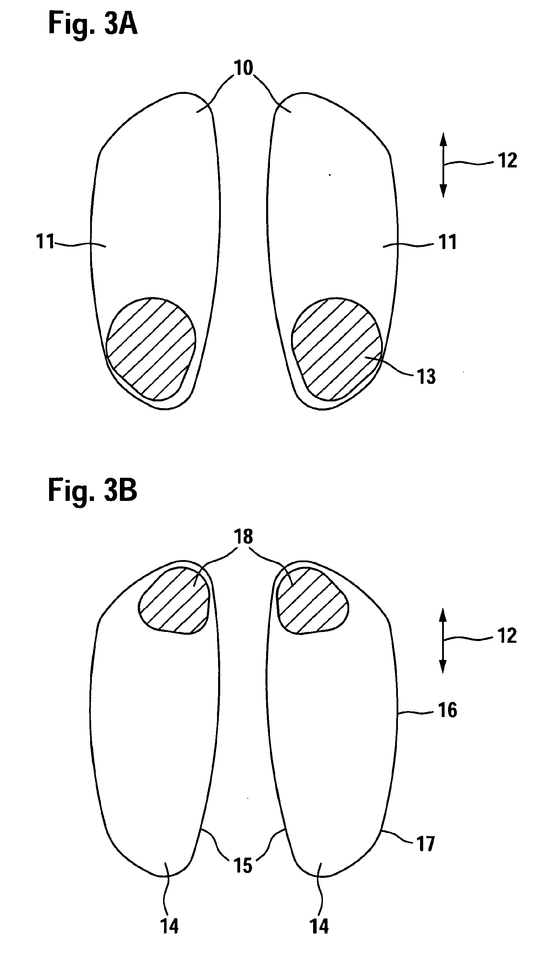

Fig. 3A zeigt ein Druckstückpaar mit Druckstücken 10 einer bekannten Laschenkette. Bei diesen bekannten Druckstücken 10 liegt der Kontaktpunkt an den Stirnflächen 11 im in Druckstückhöhenrichtung gemäß dem Doppelpfeil 12 betrachtet unteren Bereich, und der schraffierte Bereich 13 zeigt Verschleißmarken, die den gemessenen Materialabtrag nach einem Verschleißtest darstellen.

Fig. 3B zeigt Druckstücke 14 einer erfindungsgemäßen Laschenkette, die gekrümmt ausgebildete Wälzflächen 15 aufweisen und Anlageflächen 16, 17, über die die Druckstücke 14 an entsprechenden Anlageflächen nicht näher dargestellter Kettenlaschen anliegen. Die schraffierten Bereiche 18 in Fig. 3B zeigen Verschleißmarken eines gemessen Materialabtrags nach einem Verschleißtest, der dem Verschleißtest entspricht, dem die in Fig. 3A dargestellten Druckstücke 10 der bekannten Laschenkette unterzogen wurden. Wie es ohne weiteres ersichtlich ist, sind die schraffierten Flächen 18 der erfindungsgemäßen Druckstücke 14 deutlich kleiner als die schraffierten Flächen 13 der bekannten Druckstücke 10.

Fig. 4A zeigt eine Darstellung der Reibleistung einer bekannten Laschenkette mit einem Kontaktpunkt unten an den Stirnflächen der Druckstücke der bekannten Laschenkette und zwar in der linken Zeichnungshälfte beim Einlauf in ein und vollständigem Auslauf aus einem angetriebenen Kegelscheibenpaar und in der rechten Zeichnungshälfte eine ähnliche Darstellung der Reibleistung beim Einlauf in ein und vollständigem Auslauf aus einem antreibenden Kegelscheibenpaar. Wie es ohne weiteres anhand der Spitze (Peak) 19 ersichtlich ist, tritt eine Reibleistungsspitze am Auslauf der Druckstücke aus dem Zwischenraum des Kegelscheibenpaars auf. Deutlich höher noch ist die Reibleistungsspitze 20 beim Auslauf der Druckstücke aus dem Zwischenraum des antreibenden Kegelscheibenpaars.

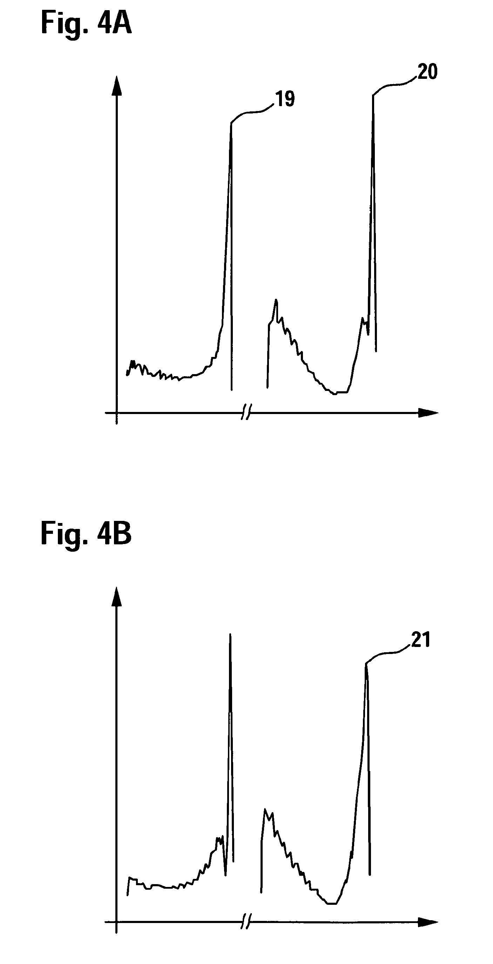

Wird nun die Darstellung gemäß Fig. 4A mit der Darstellung gemäß Fig. 4B verglichen, die in der linken Zeichnungshälfte wiederum den Verlauf der Reibleistung im Kontakt zwischen einem Druckstück und einem angetriebenen Kegelscheibenpaar zeigt und in der rechten Zeichnungshälfte den entsprechenden Verlauf der Reibleistung im Bereich des antreibenden Kegelscheibenpaars, so fällt sofort auf, dass dem Peak 20 in Fig. 4A nunmehr ein deutlich niedrigerer Peak 21 in Fig. 4B der Zeichnung gegenübersteht und somit die Reibleistung deutlich abgenommen hat, was konform geht mit den in Fig. 3B dargestellten Verschleißmarken eines erfindungsgemäßen Druckstückpaars. Die Reibleistung ist in allen Fällen deutlich in Richtung zum Einlauf in das und Auslauf aus dem Kegelscheibenpaar konzentriert und dort erfolgt auch das Klappen des Gelenks aufgrund des vorstehend beschriebenen Kippmoments, was zu einer Verringerung der Reibleistungsspitze führt, die sogenannte Blitzleistung fällt ab.

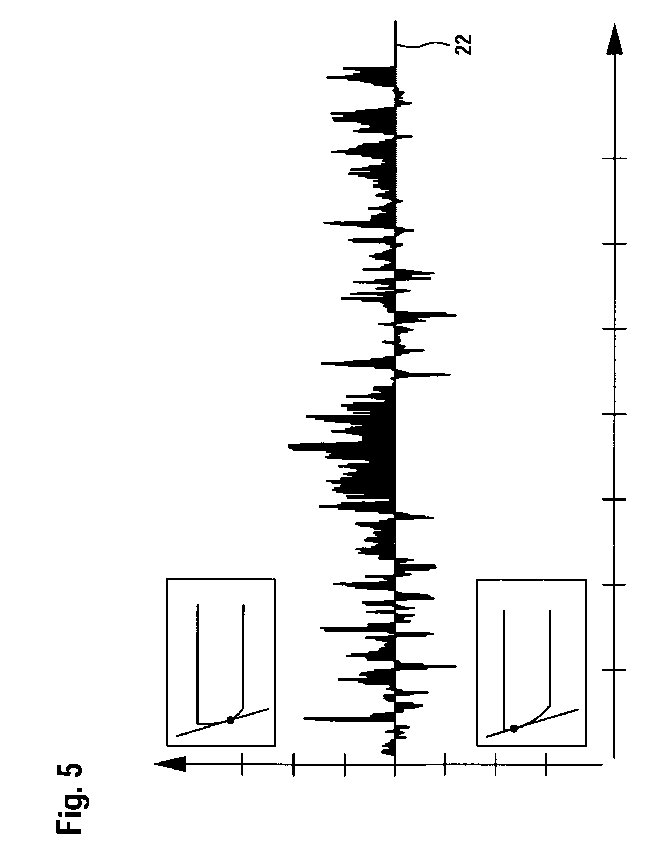

Fig. 5 der Zeichnung nun zeigt eine Darstellung des gemessenen Geräuschpegel-Unterschiedes zweier Laschenketten und zwar in der oberen Hälfte der Fig. 5 diejenigen Bereiche, in denen eine bekannte Laschenkette mit einem Kontaktpunkt im unteren Bereich der Stirnfläche der Druckstücke den höheren Pegel aufweist und in der unteren Hälfte Bereiche, in denen eine erfindungsgemäße Laschenkette mit einem Kontakt zwischen den Druckstücken und den Kegelscheiben in Druckstückhöhenrichtung im oberen Bereich der Stirnflächen der Druckstücke den höheren Pegel aufweist.

Werden nun die oberhalb und unterhalb der Linie 22 liegenden Pegel miteinander verglichen, so wird aufgrund der als schwarze Flächen dargestellten Geräuschpegel aufgetragen über der Ordnung bzw. der Frequenz sofort ersichtlich, dass die Pegel bei der bekannten Laschenkette mit Kontaktpunkt "unten" deutlich größer sind als die Pegel der erfindungsgemäßern Laschenkette mit Kontaktpunkt "oben".

Die Linie 22 repräsentiert dabei eine Linie, bei der die Pegel der bekannten und der erfindungsgemäßen Laschenkette identisch sind und es fällt sofort auf, dass die Pegel aufgetragen über der Ordnung bzw. der Frequenz - und damit die schwarzen Flächen - der bekannten Laschenkette deutlich größer sind als die Pegel der erfindungsgemäßen Laschenkette. Die erfindungsgemäße Laschenkette tritt daher beim Lauf weniger dominant akustisch in Erscheinung und ist insgesamt leiser.

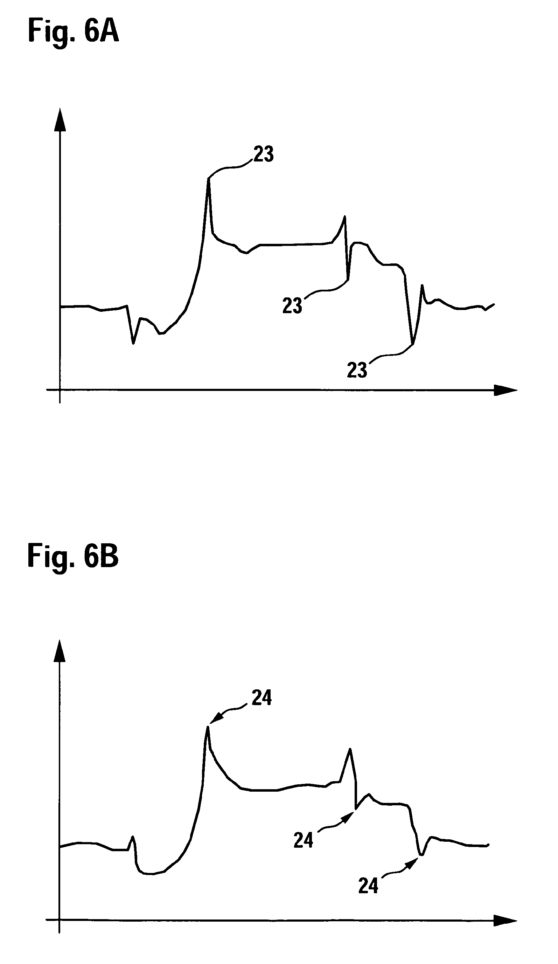

Fig. 6A zeigt den gemessenen Zugkraftverlauf auf eine Kettenlasche der bekannten Laschenkette mit Kontaktpunkt "unten", aufgetragen über der einem Umlauf entsprechenden Zeit und daraus wird sofort ersichtlich, dass die mit dem Bezugszeichen 23 bezeichneten Bereiche deutliche Zugkraftspitzen während eines Umlaufs der bekannten Laschenkette zeigen.

Wird Fig. 6A nun mit Fig. 6B verglichen, so zeigt der entsprechende Zugkraftverlauf in Fig. 6B deutlich weniger ausgeprägte Zugkraftspitzen, was anhand der Peaks 24 deutlich ersichtlich ist. Die auf eine Kettenlasche während eines Umlaufs der erfindungsgemäßen Laschenkette wirkende Zugkraft zeigt in Fig. 6B geringere Spitzenkräfte. Dies wird durch die Verlagerung des Kontaktpunkts zwischen den Druckstücken und den Kegelscheiben in Druckstückhöhenrichtung in den oberen Bereich der Stirnflächen der Druckstücke erreicht. Bei Kontaktpunkt "oben" weist die Kettenlasche also eine längere Standzeit auf oder anders ausgedrückt, das von der erfindungsgemäßen Laschenkette übertragbare Moment ist höher als das von der bekannten Laschenkette übertragbare Moment. Durch die geringeren Kraftungleichförmigkeiten in den mit 24 bezeichneten Bereichen bei der erfindungsgemäßen Laschenkette ergeben sich weniger bzw. weniger hohe Kraftspitzen, wodurch die Lebensdauer der erfindungsgemäßen Laschenkette steigt und Schwingungsanregungen und Geräusche verringert werden können.

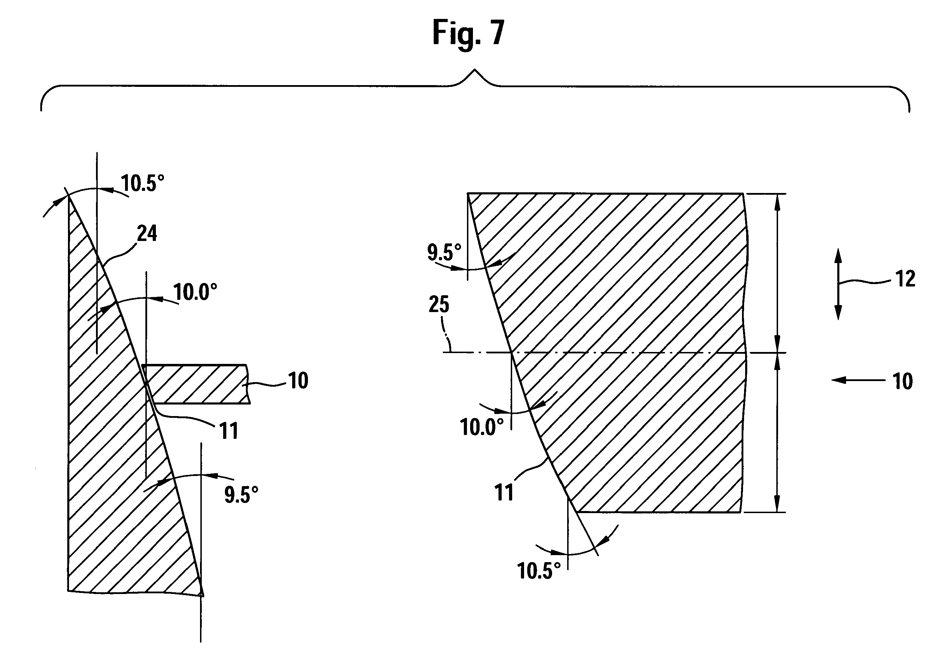

Fig. 7 der Zeichnung nun zeigt in der linken Zeichnungshälfte einen Ausschnitt einer schematisch dargestellten Kegelscheibenfläche mit in verschiedenen Bereichen unterschiedlichen Scheibenwinkeln.

Die Kegelfläche 24 weist bei der dargestellten Ausführungsform im radial innen liegenden und damit in der Zeichnung unteren Bereich einen Scheibenwinkel von beispielsweise 9,5 Grad auf. Im mittleren Bereich besitzt die Fläche 24 einen Scheibenwinkel von beispielsweise 10 Grad und im oberen Bereich einen Scheibenwinkel von beispielsweise 10,5 Grad. Das Druckstück 10 kann nun mit seiner Stirnfläche 11 den gesamten Flächenbereich überstreichen und ist in Fig. 7 in der rechten Zeichnungshälfte vergrößert dargestellt. Wie es ohne weiteres ersichtlich ist, weist es an seiner Stirnfläche der Fläche 24 komplementäre Winkel auf, nämlich im unteren Bereich 10,5 Grad, im mittleren Bereich 10 Grad und im oberen Bereich 9,5 Grad, sodass der vollständige Stirnflächenbereich 11 des Druckstücks 10 mit der Fläche 24 in Kontakt kommen kann. Findet nun ein Kontakt zwischen der Stirnfläche 11 und der Fläche 24 im unteren Bereich der Stirnfläche 11 statt, also unterhalb der mit dem Bezugszeichen 25 bezeichneten Mitte des Druckstücks 10 in Druckstückhöhenrichtung 12 betrachtet, so kommt es zu den in Fig. 3A dargestellten großflächigen Verschleißmarken 13.

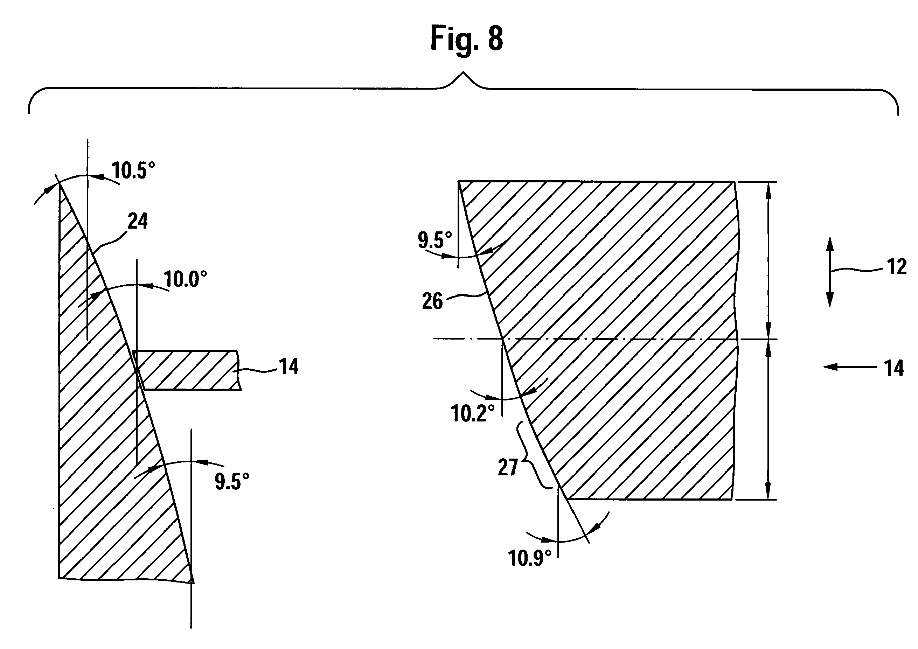

Fig. 8 der Zeichnung zeigt nun in der linken Zeichnungshälfte eine Darstellung, die der linken Zeichnungshälfte in Fig. 7 entspricht, während in der rechten Zeichnungshälfte der Fig. 8 eine vergrößerte Darstellung eines erfindungsgemäßen Druckstücks 14 dargestellt ist. Wie es ohne weiteres ersichtlich ist, weist das Druckstück 14 eine Stirnfläche 26 auf, deren Krümmung in Druckstückhöhenrichtung 12 von oben nach unten zunimmt. Die Stirnfläche weist im oberen Bereich einen Stirnkonturwinkel von 9,5 Grad auf, etwa in der Mitte in Druckstückhöhenrichtung 12 betrachtet beträgt der Stirnkonturwinkel 10,2 Grad und steigt im unteren Bereich auf 10,9 Grad an. Da damit der Stirnkonturwinkel der Stirnfläche 26 über den maximalen Scheibenwinkel von 10,5 Grad der Fläche 24 hinausgeht und sich ein Kontaktpunkt zwischen der Kegelfläche 24 und dem Druckstück 14 bei einander entsprechender Werte des Scheibenwinkels bzw. des Stirnkonturwinkels einstellt und der Scheibenwinkel keine Werte besitzt, die größer als 10,5 Grad sind und somit keine Scheibenwinkel vorhanden sind, die den, den Wert von 10,5 Grad überschreitenden Stirnkonturwinkel an der Stirnfläche 26 entsprechen, findet zwischen den Bereichen der Stirnfläche 26, die größere Stirnkonturwinkel als 10,5 Grad besitzen, und der Fläche 24 kein Kontakt mehr statt. Da der mit der geschweiften Klammer 27 bezeichnete Bereich der Stirnfläche 26 mit Stirnkonturwinkeln von größer 10,5 Grad in Druckstückhöhenrichtung des Druckstücks 14 im unteren Bereich der Stirnfläche 26 liegt, kommt dieser untere Bereich, der etwa 15 bis 35 % der Stirnfläche 26 einnimmt, nicht mehr mit der Kegelfläche 24 in Kontakt. Damit verläuft der Kontakt zwischen dem Druckstück 14 und der Fläche 24 der Kegelscheibe im oberen Bereich der Stirnfläche 26.

Damit ist deutlich geworden, dass durch die Konzentration des Kontakts der Druckstücke mit den Kegelscheiben in einem Bereich, der nicht der vollständigen Stirnfläche entspricht, nicht eine Verschlechterung des Verschleißverhaltens einhergeht, sondern im Gegensatz hierzu eine überraschende Verbesserung des Verschleißverhaltens erzielt wurde und auch eine akustisch deutliche Verbesserung.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Bereich
- 2: Bereich
- 3: Bereich
- 4: Umschlingungsradius
- 5: Übergangspunkt
- 6: Bereich, gestreckter Kettenzug
- 7: Einlaufkrümmungsradius
- 8: Pfeil
- 9: Kraftpfeil
- 10: Druckstück
- 11: Stirnfläche
- 12: Doppelpfeil
- 13: schraffierter Bereich
- 14: Druckstück
- 15: Wälzfläche
- 16: Anlagefläche
- 17: Anlagefläche
- 18: Verschleißmarken
- 19: Peak
- 20: Peak
- 21: Peak
- 22: Linie
- 23: Peak
- 24: Kegelfläche
- 25: Mitte
- 26: Stirnfläche
- 27: Bereich

## Patentansprüche

1. Laschenkette für insbesondere einen Fahrzeugantrieb, mit einer Vielzahl von über Druckstücke (14) gelenkig miteinander verbundenen Kettenlaschen, wobei die Druckstücke (14) quer zur Längsrichtung der Laschenkette verlaufen und in Öffnungen der Kettenlaschen angeordnet sind und an den Druckstücken (14) und den Kettenlaschen jeweilige gekrümmt ausgebildete Anlageflächen (16, 17) angeordnet sind, entlang derer die Druckstücke (14) und Kettenlaschen zur Kraftübertragung aneinander in Anlageflächen anliegen und an den Druckstücken (14) gekrümmt ausgebildete Wälzflächen (15) angeordnet sind, entlang derer die Druckstücke (14) zur Kraftübertragung aneinander abwälzen und die Druckstücke (14) Stirnflächen (26) zum reibschlüssigen Kontakt mit Kegelscheiben eines Kegelscheibenumschlingungsgetriebes besitzen, **dadurch gekennzeichnet, dass** die Stirnflächen (26) derart konfiguriert sind, dass ein Kontakt zwischen den Druckstücken (14) und den Kegelscheiben in Druckstückhöhenrichtung im oberen Bereich der Stirnflächen (26) stattfindet.

2. Laschenkette nach Anspruch 1, **dadurch gekennzeichnet, dass** sich der Kontaktbereich an den Stirnflächen (26) entlang etwa 65% bis 85% der Druckstückhöhenrichtung erstreckt.

3. Laschenkette nach Anspruch 1 oder 2, **dadurch gekennzeichnet, dass** die Stirnflächen (26) in Druckstückhöhenrichtung vom oberen zum unteren Bereich eine zunehmende Krümmung besitzen.

4. Laschenkette nach einem der vorstehenden Ansprüche, **dadurch gekennzeichnet, dass** die Stirnflächen (26) im unteren Bereich eine Krümmung besitzen derart, dass während des Kontakts der Druckstücke (14) mit den Kegelscheiben ein Freiraum zwischen den Stirnflächen (26) und den Kegelscheiben verbleibt.

5. Laschenkette nach einem der vorstehenden Ansprüche, **dadurch gekennzeichnet, dass** beim Einlaufen von Druckstücken (14) in einen Zwischenraum zwischen zwei Kegelscheiben an den Druckstücken (14) ein Kippmoment entsteht, welches auf ein in Laufrichtung nachfolgendes Kettensegment eine Kraft ausübt derart, dass ein Einlaufkrümmungsradius (7) des Kettensegments größer ist als ein Umschlingungsradius (4) der Kegelscheiben.

6. Druckstück für eine Laschenkette, mit einer Wälzfläche zum Kontakt mit einem zugeordneten Druckstück eines Druckstückpaares und der Wälzfläche weitgehend gegenüberliegend angeordneten gekrümmt ausgebildeten Anlageflächen (16, 17) sowie Stirnflächen (26) zum reibschlüssigen Kontakt mit Kegelscheiben eines Kegelscheibenumschlingungsgetriebes, **dadurch gekennzeichnet, dass** die Stirnflächen (26) derart konfiguriert sind, dass ein Kontakt zwischen dem Druckstück (14) und den Kegelscheiben in Druckstückhöhenrichtung im oberen Bereich der Stirnflächen (26) stattfindet.

7. Druckstück nach Anspruch 6, **dadurch gekennzeichnet, dass** die Stirnflächen (26) in Druckstückhöhenrichtung vom oberen zum unteren Bereich eine zunehmende Krümmung besitzen derart, dass ein Kontaktbereich an einer jeweiligen Stirnfläche (26) etwa 65% bis 85% der Stirnfläche (26) beträgt.

8. Kegelscheibenumschlingungsgetriebe mit einem antriebsseitigen und einem abtriebsseitigen Kegelscheibenpaar und einer Druckstücke (14) aufweisenden Laschenkette zur Momentenübertragung, **dadurch gekennzeichnet, dass** die Kegelscheiben derart konfiguriert sind, dass der Kontakt zwischen den Druckstücken (14) und den Kegelscheiben im in Druckstückhöhenrichtung oberen Bereich der Stirnflächen (26) der Druckstücke (14) stattfindet.

9. Kegelscheibenumschlingungsgetriebe nach Anspruch 8, **dadurch gekennzeichnet, dass** die Kegelflächen gekrümmt ausgebildet sind und die Krümmung der Kegelscheiben mit zunehmendem Radius der Kegelscheiben zunimmt.

10. Kegelscheibenumschlingungsgetriebe mit einer Laschenketten nach einem der Ansprüche 1 bis 5.
